# EUROPEAN PATENT APPLICATION

(11) **EP 3 779 630 A1**
(43) Date of publication of application: **17.02.2021**
(21) Application number: 18911429.1
(22) Date of filing: 27.03.2018
(51) Int. Cl.: G05D 1/02

(54) **ROBOT AVOIDANCE CONTROL METHOD AND RELATED APPARATUS**

(71) Applicant: You, Zhongqian, Shenzhen, Guangdong 518000 (CN)
(72) Inventor: You, Zhongqian, Shenzhen, Guangdong 518000 (CN)
(74) Representative: Hamer, Christopher K.
(86) International application number: PCT/CN2018/080702
(87) International publication number: WO 2019/183804

(57) **Abstract**

A robot avoidance control method and a related device are provided. The method includes: when a robot receives a trigger of an external object, a position of the robot triggered by the external object is acquired; orientation information of the external object is determined according to the position of the robot triggered by the external object; an avoidance movement policy is determined according to the orientation information of the external object and a pre-acquired environment map of an environment where the robot is located, the avoidance movement policy being determined according to the orientation information and the environment map and being used to control the robot to move in the environment map to avoid an external object that comes from an orientation indicated by the orientation information and would generate a trigger on the robot; and a movement instruction is generated according to the avoidance movement policy, the movement instruction being used to control the robot to move. Through the embodiments of the disclosure, the robot may be controlled to effectively avoid the external object.

## Description

### Technical Field

The disclosure relates to the technical field of data processing, and particularly to a robot avoidance control method and a related device.

### Background

Along with the constant development of artificial intelligence technologies, intelligent robots have emerged. At present, intelligent robots have been extensively applied to various fields, for example, the field of smart home, the field of service and the field of intelligent games. During a practical application, a robot may encounter an obstacle, a moving object and another matter in a movement (for example, walking) process. How to automatically avoid the obstacle, the moving object and the matter in the movement process of the robot is a research hotspot at present.

### Summary

Embodiments of the disclosure provide a robot avoidance control method and a related device, which may control a robot to effectively avoid an external object.

A first aspect of the embodiments of the disclosure provides a robot avoidance control method, which includes that:
when a robot receives a trigger of an external object, a position of the robot triggered by the external object is acquired by the robot;
orientation information of the external object is determined according to the position of the robot triggered by the external object;
an avoidance movement policy is determined according to the orientation information of the external object and a pre-acquired environment map of an environment where the robot is located, the avoidance movement policy being determined according to the orientation information and the environment map and being used to control the robot to move in the environment map to avoid an external object that comes from an orientation indicated by the orientation information and would generate a trigger on the robot; and
a movement instruction is generated according to the avoidance movement policy, the movement instruction being used to control the robot to move.

A second aspect of the embodiments of the disclosure provides a robot avoidance control device, which includes:
a first acquisition unit, configured to, when a robot receives a trigger of an external object, acquire a position of the robot triggered by the external object;
a first determination unit, configured to determine orientation information of the external object according to the position of the robot triggered by the external object;
a second determination unit, configured to determine an avoidance movement policy according to the orientation information of the external object and a pre-acquired environment map of an environment where the robot is located, the avoidance movement policy being determined according to the orientation information and the environment map and being used to control the robot to move in the environment map to avoid an external object that comes from an orientation indicated by the orientation information and would generate a trigger on the robot; and
an instruction generation unit, configured to generate a movement instruction according to the avoidance movement policy, the movement instruction being used to control the robot to move.

A third aspect of the embodiments of the disclosure provides a robot, which includes a processor and a memory, wherein the memory stores an executable program code, and the processor is configured to call the executable program code to execute the robot avoidance control method of the first aspect.

A fourth aspect of the embodiments of the disclosure provides a storage medium, in which an instruction is stored, the instruction running in a computer to enable the computer to execute the robot avoidance control method of the first aspect.

In the embodiments of the disclosure, when the robot receives the trigger of the external object, the position of the robot triggered by the external object is acquired at first, the orientation information of the external object is determined according to the position of the robot triggered by the external object, then the avoidance movement policy is determined according to the orientation information of the external object and the pre-acquired environment map of the environment where the robot is located, and finally, the movement instruction is generated according to the avoidance movement policy, the movement instruction being used to control the robot to move, so that the robot may be controlled to effectively avoid the external object.

### Brief Description of the Drawings

In order to describe the technical solutions in the embodiments of the disclosure more clearly, the drawings required to be used for the embodiments will be simply introduced below. It is apparent that the drawings described below are only some embodiments of the disclosure. Those of ordinary skill in the art may further obtain other drawings according to these drawings without creative work.
Fig. 1 is a flowchart of a robot avoidance control method according to an embodiment of the disclosure;
Fig. 2 is a schematic diagram of an application scenario of a robot according to an embodiment of the disclosure;
Fig. 3 is a structure diagram of a robot avoidance control device according to an embodiment of the disclosure; and
Fig. 4 is a structure diagram of a robot according to an embodiment of the disclosure.

### Detailed Description of the Embodiments

The technical solutions in the embodiments of the disclosure will be clearly and completely described below in combination with the drawings in the embodiments of the disclosure.

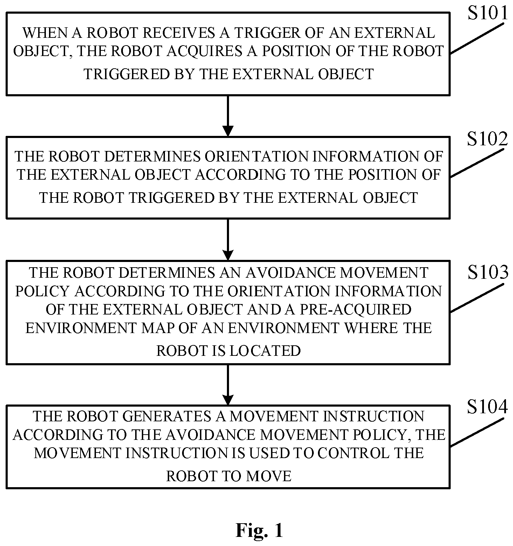

Referring to Fig. 1, Fig. 1 is a flowchart of a robot avoidance control method according to an embodiment of the disclosure. The robot avoidance control method described in the embodiment of the disclosure includes the following steps.

In S101, when a robot receives a trigger of an external object, the robot acquires a position of the robot triggered by the external object.

In the embodiment of the disclosure, the external object may be a moving object (for example, an airsoft Ball Bullet (BB) and a water bullet), and may also be light (for example, laser). The external object may be an object emitted by a emitting device (for example, an airsoft gun, a water gun, and a laser emitter) and may also be an object (for example, a coin and a stone) thrown by a user. The external object may also be an object (for example, a water drop) naturally falling in an environment where the robot is located. It is to be noted that the external object may also be an object or matter of another type and the external object may also be in another motion state. No limits are made in the embodiment of the disclosure.

That the robot receives the trigger of the external object may refer to that the robot is impacted by the external object, for example, impacted by the BB fired by the airsoft gun, and may also refer to that the robot is hit by the external object, for example, hit by the laser emitted by the laser emitter. Specifically, the robot may detect whether the robot is impacted by a moving object or not through a pre-arranged vibration sensor and detect whether the robot is hit by light or not through a pre-arranged photosensitive sensor. If it is detected that the robot is impacted by the moving object or hit by the light, the robot determines that the trigger of the external object is received. Furthermore, when the robot receives the trigger of the external object, the robot acquires the position of the robot triggered by the external object. That is, a position, impacted by the moving object, of the robot is acquired, or a position, hit by the light, of the robot is acquired. It is to be noted that at least one vibration sensor and/or at least one photosensitive sensor are/is pre-arranged at the robot and the at least one sensor and/or the at least one photosensitive sensor are/is pre-arranged on at least one body part (for example, the head, an arm and the trunk) of the robot. When both the vibration sensor and the photosensitive sensor are pre-arranged at the robot, the vibration sensor and the photosensitive sensor may be pre-arranged at the same position on the robot and may also be arranged at different positions on the robot. The robot may also be triggered by the external object in another manner. The robot may detect whether the robot is triggered by the external object in the other manner or not through a pre-arranged sensor of another type.

In some feasible implementation modes, an initial reference hit point N (for example, 12), i.e., a preset total hit point of the robot, is preset in the robot. A mapping relationship between a hit point and a body part of the robot is preset. For example, the head of the robot corresponds to a hit point n1 (for example, 3), the trunk of the robot corresponds to a hit point n2 (for example, 2), and the arm of the robot corresponds to a hit point n3 (for example, 1). When the robot receives the trigger of the external object, the hit point of the robot is decreased according to the position of the robot triggered by the external object. For example, when the position of the robot triggered by the external object is at the head of the robot, the robot subtracts n1 from the initial reference hit point N to obtain a decreased hit point N1 and regulates the initial reference hit point N to the hit point N1. It is to be noted that the same operations may be executed for the condition that the head of the robot is retriggered by an external object and the condition that another part of the robot is triggered by an external object, and elaborations are omitted herein.

In some feasible implementation modes, after the robot decreases the hit point of the robot according to the position of the robot triggered by the external object, if a present hit point of the robot is not zero, timing is started; and if it is detected that the robot is not retriggered by an external object in a first preset time length (for example, 30s) after the robot is triggered by the external object, namely it is not detected that the robot is impacted again by any moving object or hit again by light in the first preset time length, the present hit point of the robot is increased, for example, adding 1 to the present hit point of the robot. Furthermore, if it is not detected that the robot is retriggered by any external object in the first preset time length after the present hit point of the robot is increased, the present hit point of the robot is re-increased. That is, on the premise that the robot is not retriggered by any external object, the present hit point of the robot is increased at an interval of the first preset time length until the present hit point of the robot is equal to the initial reference hit point.

In some feasible implementation modes, after the robot decreases the hit point of the robot according to the position of the robot triggered by the external object, if the present hit point of the robot is zero, the robot is controlled to enter a stationary state, namely the robot is controlled to stop moving, and timing is started; and when it is detected according to a timing result that a time length when the robot is controlled in the stationary state is greater than a second preset time length (for example, 1 min), the present hit point of the robot is reset to be the initial reference hit point N, and the robot is controlled to restart moving in the environment where the robot is located.

In some feasible implementation modes, when the robot receives the trigger of the external object, the robot controls the robot to send a trigger signal or an alarm signal to prompt the user that the robot is hit by the external object or the robot receives an impact of the moving object. The robot may send the trigger signal through flashing light, may also send the trigger signal by producing a preset specific sound, and may further send the trigger signal by doing a preset specific action (for example, vibration). The robot may also send the trigger signal in another manner. No limits are made in the embodiment of the disclosure.

In S102, the robot determines orientation information of the external object according to the position of the robot triggered by the external object.

In the embodiment of the disclosure, the robot, after acquiring the position, impacted or hit by the external object, of the robot, determines the orientation information of the external object according to the position, impacted or hit by the external object, of the robot, and the orientation information of the external object includes direction information of the external object.

In some feasible implementation modes, when the robot receives the impact of the external object, the robot determines that the external object is the moving object, the position, impacted by the moving object, of the robot and pressure information generated when the moving object impacts the robot are acquired at first, the pressure information including a magnitude of a pressure value and pressure direction information; and then the robot determines the direction information of the external object according to the position, impacted by the external object, of the robot and analyzes the acquired magnitude of the pressure value and pressure direction information to determine position information of the moving object, namely predicting a position region where the moving object is located before being sent.

In some feasible implementation modes, the robot may acquire an image of the environment where the robot is located at a preset time interval (for example, 2s or 3s) through a pre-arranged camera and process and analyze multiple images acquired at different moments to obtain the orientation information of the external object, the orientation information including the direction information and position information of the external object. It is to be noted that one or more cameras may be pre-arranged in the robot and the camera may be a monocular camera and may also be a binocular camera or a multi-view camera. No limits are made in the embodiment of the disclosure.

In S103, the robot determines an avoidance movement policy according to the orientation information of the external object and a pre-acquired environment map of an environment where the robot is located.

In the embodiment of the disclosure, an environment detection device is pre-arranged in the robot, and the environment detection device may be arranged on multiple parts of the robot, and furthermore, may be arranged at the head or another rotatable part of the robot. The environment detection device may be, for example, a depth camera, and the depth camera may be a monocular camera and may also be a multi-view camera. The environment detection device may also be a laser radar. No limits are made in the embodiment of the disclosure. The environment map of the environment where the robot is located is pre-acquired by the robot. Specifically, the robot performs obstacle recognition on the environment where the robot is located or a surrounding environment on a movement path of the robot at first through the pre-arranged environment detection device to acquire obstacle information of the environment where the robot is located, the obstacle information including one or more of distance information between an obstacle and the robot, orientation information of the obstacle, shape information of the obstacle and size information of the obstacle. Then, the robot constructs the environment map of the environment where the robot is located in real time according to the obstacle information. Specifically, the robot may construct a two-dimensional environment map of the environment where the robot is located in real time according to the obstacle information by use of a laser Simultaneous Localization and Mapping (SLAM) technology, and may also construct a three-dimensional environment map of the environment where the robot is located in real time according to the obstacle information by use of a visual SLAM technology. It is to be noted that the robot may also construct the environment map of the environment where the robot is located by use of another technology. No limits are made in the embodiment of the disclosure. After the robot pre-acquires the environment map of the environment where the robot is located, a movement route of the robot may be reasonably planned according to the environment map, so that the robot may be controlled to effectively avoid the obstacle when moving in the environment to implement protection over the robot.

In the embodiment of the disclosure, the avoidance movement policy is determined according to the orientation information of the external object and the environment map of the environment where the robot is located, and is used to control the robot to move in the environment corresponding to the environment map to avoid an external object that comes from (in other words, sent from) an orientation indicated by the orientation information of the external object and would generate a trigger on the robot.

In S104, the robot generates a movement instruction according to the avoidance movement policy, the movement instruction being used to control the robot to move.

In some feasible implementation modes, a specific manner the robot determines the avoidance movement policy according to the orientation information of the external object and the pre-acquired environment map of the environment where the robot is located is as follows: the robot predicts a position region in the environment map to which the external object will arrive when the external object is resent at first according to the orientation information of the external object; and then target orientation information is determined according to the predicted position region to which the external object will arrive in the environment map when the external object is resent and the pre-acquired environment map of the environment where the robot is located, the target orientation information including a target direction and a target position. The target direction may be a direction opposite to the direction indicated by the orientation information of the external object and may also be a direction forming a preset angle (for example, 45 degrees or 90 degrees) with the direction indicated by the orientation information of the external object. The target position may be a position in the environment map with a relatively low probability that the robot is retriggered by the external object. Specifically, the target position may be a position with a lowest probability that the external object arrives in the position region to which the external object will arrive in the environment map when the external object is resent, i.e., a position with a lowest probability that the robot is retriggered by the external object in the position region to which the external object will arrive in the environment map when the external object is resent. The target position may also be a position determined according to the target direction and spaced from the position region to which the external object will arrive in the environment map when the external object is resent by a preset distance (for example, 0.5m), that is, the target position is in a position region outside the position region to which the external object will arrive in the environment map when the external object is resent.

Furthermore, a specific manner that the robot generates the movement instruction according to the avoidance movement policy is as follows: the robot plans an avoidance route of the robot, i.e., the movement route of the robot, at first according to the determined target orientation information. The avoidance route may be a route with a shortest distance from a present position of the robot to the position indicated by the target orientation information, may also be a route consuming shortest time from the present position of the robot to the position indicated by the target orientation information, and may also be a route with a lowest probability that the robot is retriggered by the external object in a process from the present position of the robot to the position indicated by the target orientation information, etc. Then, the robot generates the movement instruction according to the planned avoidance route, the movement instruction being used to control the robot to move in the environment where the robot is located according to the avoidance route and move to the position indicated by the target orientation information to avoid the external object that comes from the orientation indicated by the orientation information of the external object and would generate the trigger on the robot.

In some feasible implementation modes, a specific manner that the robot determines the avoidance movement policy according to the orientation information of the external object and the pre-acquired environment map of the environment where the robot is located is as follows: the robot predicts the position region to which the external object will arrive in the environment map when the external object is resent at first according to the orientation information of the external object; and then a target obstacle is determined according to the predicted position region to which the external object will arrive in the environment map when the external object is resent, the pre-acquired environment map of the environment where the robot is located and the pre-acquired obstacle information of the environment where the robot is located. The target obstacle may refer to an obstacle in the environment map, which is located at the preset distance from the position region to which the external object will arrive when the external object is resent, that is, the target obstacle is in a position region outside the position region to which the external object will arrive in the environment map when the external object is resent. The target obstacle may also refer to an obstacle of which the side facing the external object may occlude the external object, that is, the position region to which the external object will arrive in the environment map when the external object is resent is on one side of the target obstacle facing the external object, one side of the target obstacle away from the external object is in a position region outside the position region to which the external object will arrive in the environment map when the external object is resent.

Furthermore, a specific manner that the robot generates the movement instruction according to the avoidance movement policy is as follows: the robot plans the avoidance route of the robot at first according to obstacle information of the determined target obstacle. The avoidance route may be a route with a shortest distance from the present position of the robot to a position of the side of the target obstacle away from the external object, may also be a route consuming shortest time from the present position of the robot to the position of the side of the target obstacle away from the external object, and may also be a route with a lowest probability that the robot is retriggered by the external object in a process from the present position of the robot to the position of the side of the target obstacle away from the external object, etc. Then, the robot generates the movement instruction according to the planned avoidance route, the movement instruction being used to control the robot to move in the environment where the robot is located according to the avoidance route and move to the position of the side of the target obstacle away from the external object to avoid the external object that comes from the orientation indicated by the orientation information of the external object and would generate the trigger on the robot.

In some feasible implementation modes, the movement instruction is further used to control a speed and/or direction of the robot moving according to the avoidance route. Specifically, the movement instruction may be used to control the robot to continuously regulate the movement speed when moving according to the avoidance route. The movement instruction may also be used to control the robot to continuously regulate the movement direction when moving according to the avoidance route. For example, when the robot moves on the avoidance route according to the movement instruction, the movement speed of the robot may be increased at a first preset interval, and in such case, the movement speed of the robot is a first speed; and the movement speed of the robot is decreased at a second preset interval, and in such case, the movement speed of the robot is a second speed. It is to be noted that values of the first preset interval and the second preset interval may be the same and may also be different and the first speed is higher than the second speed. When the movement speed of the robot is re-increased, the speed of the robot may be higher than the first speed, may also be lower than the first speed and may also be equal to the first speed, that is, a value of the first speed may keep changing. Similarly, a value of the second speed may also keep changing, and the values of the first preset interval and the second preset interval may also keep changing. Elaborations are omitted herein.

Furthermore, the robot may control the robot to move leftwards (or forwards) at a third preset interval, and in such case, a movement distance of the robot is a first distance; and the robot is controlled to move rightwards (or backwards) at a fourth preset interval, and in such case, the movement distance of the robot is a second distance. It is to be noted that values of the third preset interval and the fourth preset interval may be the same and may also be different and values of the first distance and the second distance may be the same and may also be different. When the robot is controlled to move leftwards (or forwards) again, the movement distance of the robot may be longer than the first distance, may also be shorter than the first distance and may also be equal to the first distance, that is, the value of the first distance may keep changing. Similarly, the value of the second distance may also keep changing, and the values of the third preset interval and the fourth preset interval may also keep changing. Elaborations are omitted herein. In such a manner, the robot may be controlled to keep changing the speed and/or the direction when moving according to the avoidance route, so that a probability that the robot is retriggered by the external object when moving according to the avoidance route may further be reduced.

In some feasible implementation modes, the robot may determine multiple pieces of target orientation information or multiple target obstacles. The robot processes and analyzes each avoidance route corresponding to the determined target orientation information or target obstacles at first to predict a probability that the robot is impacted or hit by an external object in each avoidance route corresponding to each piece of target orientation information or each target obstacle. Then, the avoidance route with the lowest probability that the robot is impacted or hit by the external object is selected as a target avoidance route, and the movement instruction is generated according to the target avoidance route, the movement instruction being used to control the robot to move in the environment where the robot is located according to the target avoidance route and move to a destination position of the target avoidance route to avoid the external object that comes from the orientation indicated by the orientation information of the external object and would generate the trigger on the robot.

In some feasible implementation modes, the movement speed of the robot is related to the present hit point of the robot. The movement speed of the robot may be positively related to the present hit point of the robot, namely the movement speed of the robot is higher if the present hit point of the robot is greater, otherwise is lower. Or, the movement speed of the robot may be negatively related to the present hit point of the robot, namely the movement speed of the robot is lower if the present hit point of the robot is greater, otherwise is higher. No limits are made in the embodiment of the disclosure.

In such a manner, the robot, after being triggered by the external object, may determine the orientation information of the external object and determine the avoidance movement policy according to the orientation information of the external object and the pre-acquired environment map of the environment where the robot is located. The avoidance movement policy may instruct the robot to control the robot to avoid the external object by use of the obstacle in the environment where the robot is located or according to a direction different from the direction indicated by the orientation information of the external object, so that the robot may be controlled to effectively avoid the external object.

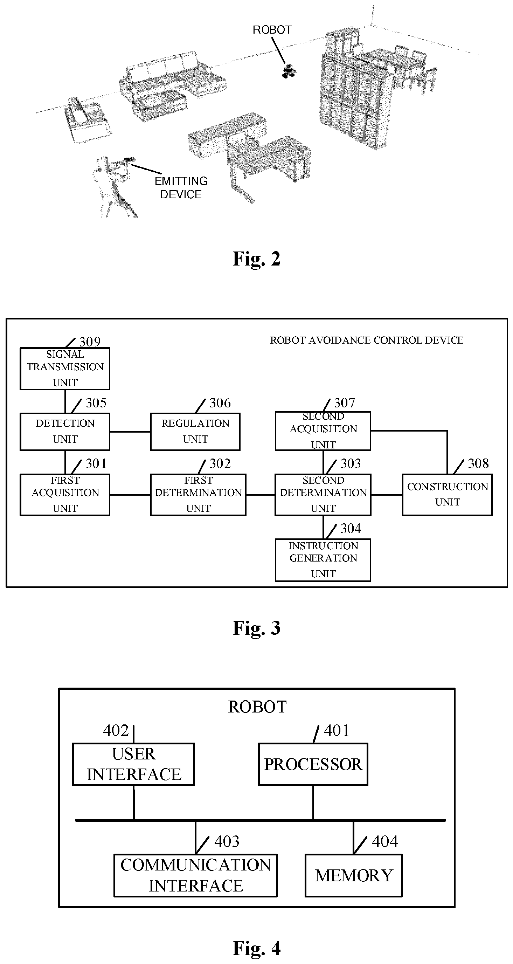

For describing the technical solution in the embodiment of the disclosure better, descriptions will be made below with an example. Referring to Fig. 2, Fig. 2 is a schematic diagram of an application scenario of a robot according to an embodiment of the disclosure. As shown in Fig. 2, the robot is applied to a true reality game, an environment where the robot is located is a home (or office) of a user, the environment where the robot is located includes obstacles such as stools, desks, cabinets, sofas and walls, and the user holds an emitting device. The robot controls the robot through a movement module (for example, a wheel or a foot-like structure) to move on the ground. In a movement process, the robot detects an obstacle in a surrounding environment of a movement path of the robot through an environment detection device (for example, a depth camera or a laser radar), thereby judging an impassable direction where there is an obstacle and a passable direction where there is no obstacle. The robot controls the robot to move to the passable direction and continues detecting an obstacle the surrounding environment of the movement path of the robot in real time to acquire obstacle information of the obstacle, the obstacle information including one or more of distance information between the obstacle and the robot, orientation information of the obstacle, shape information of the obstacle and size information of the obstacle. The robot constructs an environment map of the environment where the robot is located in real time according to the acquired obstacle information, thereby pre-acquiring the environment map of the environment where the robot is located, the environment map recording position information of the obstacle and the like.

In a gaming process, the user holds the emitting device capable of emitting laser, or firing the airsoft BB or firing the water bullet to shoot the robot. The robot is provided with a photosensitive sensor and/or a vibration sensor. After the robot is hit by the laser, the laser is sensed by the photosensitive sensor of the robot and collected by the robot, and it is determined that the robot is hit by the laser. If the robot is impacted by an object such as the airsoft BB or the water bullet, the robot may generate a transient strong vibration, the vibration is sensed by the vibration sensor of the robot and collected by the robot, and it is determined that the robot is hit. After it is detected that the robot is hit by the laser, the airsoft BB or the water bullet, the robot may flash, or produce a sound or vibrate to prompt the user that the robot is hit.

After it is determined that the robot is hit, a present hit point of the robot is modified and recorded according to a count that the robot is hit and a hit position, and after the count that the robot is hit reaches a preset count, namely the present hit point of the robot changes to zero, the robot is controlled to enter a stationary state and stop moving. For example, if a total hit point of the robot is 3, 1 is subtracted from the present hit point every time when the robot is hit, and after the robot is hit for three times, the robot enters the stationary state. After the robot modifies the present hit point of the robot, if the present hit point of the robot is not zero, the robot is controlled to enter an avoidance mode. In the avoidance mode, the robot plans a movement route where shooting may be avoided and generates a movement instruction, the movement instruction being used to control the robot to move along the movement route to avoid the laser, the airsoft BB or the water bullet. For example, the robot determines orientation information of the laser, the airsoft BB or the water bullet according to the position hit by the laser, the airsoft BB or the water bullet, analyzes the pre-acquired environment map to select a passable movement route in a direction deviated from a direction indicated by the orientation information and controls the robot to move according to the movement route. Or, the robot searches and analyzes the obstacles in the environment map, and if finding an obstacle capable of occluding the laser, the airsoft BB or the water bullet, determines the obstacle as a target obstacle and controls the robot to move to the side, where the laser, the airsoft BB or the water bullet may be avoided, of the target obstacle, so that the robot may be controlled to effectively avoid the laser, the airsoft BB or the water bullet.

Furthermore, a movement speed of the robot in the avoidance mode is related to the hit point, and when the hit point of the robot is relatively great, the movement speed of the robot is relatively high, otherwise the movement speed of the robot is relatively low. In addition, the hit point of the robot may be regularly recovered, and after the robot is hit by the laser, the airsoft BB or the water bullet, if the robot is not hit again in time more than certain time in an avoidance process, the hit point is gradually recovered. For example, if the robot is not hit again in 1min, 1 is added to the present hit point of the robot. After the robot enters the stationary state and the robot is controlled to stop moving for certain time, the hit point of the robot is recovered to an initial reference hit point, and the robot is controlled to restart moving. In such a manner, interaction between the robot and the user in the game may be implemented on one hand; and on the other hand, robot-related games may be developed from augmented reality games to true reality games, so that user experiences are effectively improved, and there are more gaming manners and funs.

It is to be noted that the robot in the embodiment of the disclosure may also be a robot with a flying function. A method for avoiding an external object in a flight process of the robot may also refer to the above descriptions and will not be elaborated herein.

In the embodiment of the disclosure, when the robot receives the trigger of the external object, the position of the robot triggered by the external object is acquired at first, the orientation information of the external object is determined according to the position of the robot triggered by the external object, then the avoidance movement policy is determined according to the orientation information of the external object and the pre-acquired environment map of the environment where the robot is located, the avoidance movement policy being determined according to the orientation information and the environment map and being used to control the robot to move in the environment map to avoid the external object that comes from the orientation indicated by the orientation information and would generate the trigger on the robot, and finally, the movement instruction is generated according to the avoidance movement policy, the movement instruction being used to control the robot to move, so that the robot may be controlled to effectively avoid the external object.

Referring to Fig. 3, Fig. 3 is a structure diagram of a robot avoidance control device according to an embodiment of the disclosure. The robot avoidance control device described in the embodiment of the disclosure corresponds to the abovementioned robot. The robot avoidance control device includes:
a first acquisition unit 301, configured to, when a robot receives a trigger of an external object, acquire a position of the robot triggered by the external object;
a first determination unit 302, configured to determine orientation information of the external object according to the position of the robot triggered by the external object;
a second determination unit 303, configured to determine an avoidance movement policy according to the orientation information of the external object and a pre-acquired environment map of an environment where the robot is located, the avoidance movement policy being determined according to the orientation information and the environment map and being used to control the robot to move in the environment map to avoid an external object that comes from an orientation indicated by the orientation information and would generate a trigger on the robot; and
an instruction generation unit 304, configured to generate a movement instruction according to the avoidance movement policy, the movement instruction being used to control the robot to move.

In some feasible implementation modes, a specific manner that the second determination unit 303 determines the avoidance movement policy according to the orientation information of the external object and the pre-acquired environment map of the environment where the robot is located is:
predicting a position region to which the external object will arrive in the environment map according to the orientation information of the external object; and
determining target orientation information according to the position region and the environment map,
a specific manner that the instruction generation unit 304 generates the movement instruction according to the avoidance movement policy is:
   generating the movement instruction according to the target orientation information,
   the movement instruction being used to control the robot to move in the environment map according to the target orientation information to avoid the external object that comes from the orientation indicated by the orientation information and would generate the trigger on the robot.

In some feasible implementation modes, a specific manner that the second determination unit 303 determines the avoidance movement policy according to the orientation information of the external object and the pre-acquired environment map of the environment where the robot is located is:
predicting the position region to which the external object will arrive in the environment map, according to the orientation information of the external object; and
determining a target obstacle according to the position region, the environment map and pre-acquired obstacle information of the environment where the robot is located,
a specific manner that the instruction generation unit 304 generates the movement instruction according to the avoidance movement policy is:
   generating the movement instruction according to obstacle information of the target obstacle,
   the movement instruction being used to control the robot to move to the side of the target obstacle away from the external object to avoid the external object that comes from the orientation indicated by the orientation information and would generate the trigger on the robot.

In some feasible implementation modes, the external object includes a moving object and light, and the robot avoidance control device further includes:
a detection unit 305, configured to detect whether the robot receives a trigger of the moving object or not through a pre-arranged vibration sensor and detect whether the robot receives a trigger of the light or not through a pre-arranged photosensitive sensor; and
a regulation unit 306, configured to, when the robot receives the trigger of the external object, decrease a hit point of the robot according to the position of the robot triggered by the external object.

In some feasible implementation modes, the regulation unit 306 is further configured to, if the hit point of the robot is not zero and the robot is not retriggered by the external object in a first preset time length after being triggered by the external object, increase the hit point of the robot.

In some feasible implementation modes, the regulation unit 306 is further configured to, if the hit point of the robot is zero, control the robot to enter a stationary state, and
when a time length when the robot is in the stationary state is greater than a second preset time length, reset the hit point of the robot to be an initial reference hit point and control the robot to restart moving.

In some feasible implementation modes, the robot avoidance control device further includes:
a second acquisition unit 307, performing obstacle recognition on the environment where the robot is located to acquire the obstacle information of the environment where the robot is located; and
a construction unit 308, configured to construct the environment map of the environment where the robot is located in real time according to the obstacle information,
the obstacle information including one or more of distance information between an obstacle and the robot, orientation information of the obstacle, shape information of the obstacle and size information of the obstacle.

In some feasible implementation modes, the robot avoidance control device further includes:
a signal transmission unit 309, configured to control the robot to transmit a trigger signal when the robot receives the trigger of the external object, the trigger signal including flashing light, a sound or an action.

It can be understood that functions of each function unit of the robot avoidance control device of the embodiment of the disclosure may be specifically realized according to the method in the method embodiment and specific realization processes may refer to the related descriptions in the method embodiment and will not be elaborated herein.

In the embodiment of the disclosure, when the robot receives the trigger of the external object, the first acquisition unit 301 is triggered to acquire the position of the robot triggered by the external object at first, the first determination unit 302 is triggered to determine the orientation information of the external object according to the position of the robot triggered by the external object, then the second determination unit 303 is triggered to determine the avoidance movement policy according to the orientation information of the external object and the pre-acquired environment map of the environment where the robot is located, the avoidance movement policy being determined according to the orientation information and the environment map and being used to control the robot to move in the environment map to avoid the external object that comes from the orientation indicated by the orientation information and would generate the trigger on the robot, and finally, the instruction generation unit 304 is triggered to generate the movement instruction according to the avoidance movement policy, the movement instruction being used to control the robot to move, so that the robot may be controlled to effectively avoid the external object.

Referring to Fig. 4, Fig. 4 is a structure diagram of a robot according to an embodiment of the disclosure. The robot described in the embodiment of the disclosure includes a processor 401, a user interface 402, a communication interface 403 and a memory 404. The processor 401, the user interface 402, the communication interface 403 and the memory 404 may be connected through a bus or in another manner, and connection through the bus is taken as an example in the embodiment of the disclosure.

The processor 401 (or called a Central Processing Unit (CPU)) is a computing core and control core of the robot, and may parse various instructions in the robot and process various types of data of the robot. For example, the CPU may be configured to parse a power-on/off instruction sent to the robot by a user and control the robot to execute power-on/off operation. For another example, the CPU may transmit various types of interactive data between internal structures of the robot, etc. The user interface 402 is a medium implementing interaction and information exchange between the user and the robot, and a specific implementation thereof may include a display for output and a keyboard for input, etc. It is to be noted that the keyboard may be a physical keyboard, may also be a touch screen virtual keyboard and may also be a combined physical and touch screen virtual keyboard. The communication interface 403 may optionally include a standard wired interface and wireless interface (for example, Wireless Fidelity (WI-FI) and mobile communication interfaces), and may be controlled by the processor 403 to send and receive data. The communication interface 403 may further be configured for transmission and interaction of signaling and instructions in the robot. The memory 404 is a memory device in the robot, and is configured to store programs and data. It can be understood that the memory 404 may include a built-in memory of the robot and, of course may also include an extended memory supported by the robot. The memory 404 provides a storage space, and the storage space stores an operating system of the robot, including, but not limited to: an Android system, an iOS system, a Windows Phone system and the like. No limits are made thereto in the disclosure.

In the embodiment of the disclosure, the processor 401 runs an executable program code in the memory 404 to execute the following operations:
when the robot receives a trigger of an external object, a position of the robot triggered by the external object is acquired;
orientation information of the external object is determined according to the position of the robot triggered by the external object;
an avoidance movement policy is determined according to the orientation information of the external object and a pre-acquired environment map of an environment where the robot is located, the avoidance movement policy being determined according to the orientation information and the environment map and being used to control the robot to move in the environment map to avoid an external object that comes from an orientation indicated by the orientation information and would generate a trigger on the robot; and
a movement instruction is generated according to the avoidance movement policy, the movement instruction being used to control the robot to move.

In some feasible implementation modes, a specific manner that the processor 401 determines the avoidance movement policy according to the orientation information of the external object and the pre-acquired environment map of the environment where the robot is located is:
predicting a position region to which the external object will arrive in the environment map, according to the orientation information of the external object; and
determining target orientation information according to the position region and the environment map,
a specific manner that the processor 401 generates the movement instruction according to the avoidance movement policy is:
   generating the movement instruction according to the target orientation information,
   the movement instruction being used to control the robot to move in the environment map according to the target orientation information to avoid the external object that comes from the orientation indicated by the orientation information and would generate the trigger on the robot.

In some feasible implementation modes, a specific manner that the processor 401 determines the avoidance movement policy according to the orientation information of the external object and the pre-acquired environment map of the environment where the robot is located is:
predicting the position region to which the external object will arrive in the environment map, according to the orientation information of the external object; and
determining a target obstacle according to the position region, the environment map and pre-acquired obstacle information of the environment where the robot is located,
a specific manner that the processor 401 generates the movement instruction according to the avoidance movement policy is:
   generating the movement instruction according to obstacle information of the target obstacle,
   the movement instruction being used to control the robot to move to the side of the target obstacle away from the external object to avoid the external object that comes from the orientation indicated by the orientation information and would generate the trigger on the robot.

In some feasible implementation modes, the external object includes a moving object and light, and the processor 401 is further configured to:
detect whether the robot receives a trigger of the moving object or not through a pre-arranged vibration sensor and detect whether the robot receives a trigger of the light or not through a pre-arranged photosensitive sensor; and
when the robot receives the trigger of the external object, decrease a hit point of the robot according to the position of the robot triggered by the external object.

In some feasible implementation modes, after the processor 401 decreases the hit point of the robot according to the position of the robot triggered by the external object, the processor 401 is further configured to:
if the hit point of the robot is not zero and the robot is not retriggered by the external object in a first preset time length after being triggered by the external object, increase the hit point of the robot.

In some feasible implementation modes, after the processor 401 decreases the hit point of the robot according to the position of the robot triggered by the external object, the processor 401 is further configured to:
if the hit point of the robot is zero, control the robot to enter a stationary state; and
when a time length when the robot is in the stationary state is greater than a second preset time length, reset the hit point of the robot to be an initial reference hit point and control the robot to restart moving.

In some feasible implementation modes, the processor 401 is further configured to:
perform obstacle recognition on the environment where the robot is located to acquire the obstacle information of the environment where the robot is located; and
construct the environment map of the environment where the robot is located in real time according to the obstacle information,
the obstacle information including one or more of distance information between an obstacle and the robot, orientation information of the obstacle, shape information of the obstacle and size information of the obstacle.

In some feasible implementation modes, the processor 401 is further configured to:
when the robot receives the trigger of the external object, control the robot to send a trigger signal, the trigger signal including flashing light, a sound or an action.

During specific implementation, the processor 401, user interface 402, communication interface 403 and memory 404 described in the embodiment of the disclosure may execute implementation modes of a robot described in a robot avoidance control method provided in the embodiments of the disclosure and may also execute implementation modes described in a robot avoidance control device provided in Fig. 3 in the embodiments of the disclosure. Elaborations are omitted herein.

In the embodiment of the disclosure, when the robot receives the trigger of the external object, the processor 401 acquires the position of the robot triggered by the external object at first, determines the orientation information of the external object according to the position of the robot triggered by the external object, then determines the avoidance movement policy according to the orientation information of the external object and the pre-acquired environment map of the environment where the robot is located, the avoidance movement policy being determined according to the orientation information and the environment map and being used to control the robot to move in the environment map to avoid the external object that comes from the orientation indicated by the orientation information and would generate the trigger on the robot, and finally generates the movement instruction according to the avoidance movement policy, the movement instruction being used to control the robot to move, so that the robot may be controlled to effectively avoid the external object.

The embodiments of the disclosure also provide a computer-readable storage medium, in which an instruction is stored, the instruction running in a computer to enable the computer to execute the robot avoidance control method of the method embodiment.

The embodiments of the disclosure also provide a computer program product including an instruction, running in a computer to enable the computer to execute the robot avoidance control method of the method embodiment.

It is to be noted that, for simple description, each method embodiment is expressed as a combination of a series of operations, but those skilled in the art should know that the disclosure is not limited by a described sequence of the operations because some steps may be executed in another sequence or simultaneously according to the disclosure. Second, those skilled in the art should also know that all the embodiments described in the specification are preferred embodiments and the operations and units involved therein are not always required by the disclosure.

Those of ordinary skill in the art may understand that all or part of the steps in the method of the above embodiments may be completed by related hardware instructed by a program. The program may be stored in computer-readable storage medium. The storage medium may include: a flash disk, a Read-Only Memory (ROM), a Random Access Memory (RAM), a magnetic disk or a compact disc.

The robot avoidance control method and related device provided in the embodiments of the disclosure are introduced above in detail. Herein, the principle and implementation modes of the disclosure are elaborated with specific examples, and the above descriptions of the embodiments are only made to help the method of the disclosure and the core concept thereof to be understood. In addition, those of ordinary skill in the art may make changes to the specific implementation modes and the application range according to the concept of the disclosure. In conclusion, the contents of the specification should not be understood as limits to the disclosure.

## Claims

1. A robot avoidance control method, comprising:
acquiring, by a robot, a position of the robot triggered by an external object, upon receiving a trigger of the external object;
determining orientation information of the external object according to the position of the robot triggered by the external object;
determining an avoidance movement policy according to the orientation information of the external object and a pre-acquired environment map of an environment where the robot is located, the avoidance movement policy being determined according to the orientation information and the environment map and being used to control the robot to move in the environment map to avoid an external object that comes from an orientation indicated by the orientation information and would generate a trigger on the robot; and
generating a movement instruction according to the avoidance movement policy, the movement instruction being used to control the robot to move.

2. The method as claimed in claim 1, wherein determining the avoidance movement policy according to the orientation information of the external object and the pre-acquired environment map of the environment where the robot is located comprises:
predicting a position region in the environment map to which the external object will arrive, according to the orientation information of the external object; and
determining target orientation information according to the position region and the environment map; and
generating the movement instruction according to the avoidance movement policy comprises:
generating the movement instruction according to the target orientation information,
the movement instruction being used to control the robot to move in the environment map according to the target orientation information to avoid the external object that comes from the orientation indicated by the orientation information and would generate the trigger on the robot.

3. The method as claimed in claim 1, wherein determining the avoidance movement policy according to the orientation information of the external object and the pre-acquired environment map of the environment where the robot is located comprises:
predicting the position region in the environment map to which the external object will arrive, according to the orientation information of the external object; and
determining a target obstacle according to the position region, the environment map and pre-acquired obstacle information of the environment where the robot is located; and
generating the movement instruction according to the avoidance movement policy comprises:
generating the movement instruction according to obstacle information of the target obstacle,
the movement instruction being used to control the robot to move to one side of the target obstacle away from the external object, to avoid the external object that comes from the orientation indicated by the orientation information and would generate the trigger on the robot.

4. The method as claimed in any one of claims 1-3, wherein the external object comprises a moving object and light, and the method further comprises:
detecting whether the robot receives a trigger of the moving object or not through a pre-arranged vibration sensor, and detecting whether the robot receives a trigger of the light or not through a pre-arranged photosensitive sensor; and
decreasing a hit point of the robot according to the position of the robot triggered by the external object, when the robot receives the trigger of the external object.

5. The method as claimed in claim 4, after decreasing the hit point of the robot according to the position of the robot triggered by the external object, further comprising:
increasing the hit point of the robot, when the hit point of the robot is not zero and the robot is not retriggered again by the external object in a first preset time length after being triggered by the external object.

6. The method as claimed in claim 4, after decreasing the hit point of the robot according to the position of the robot triggered by the external object, further comprising:
controlling the robot to enter a stationary state, when the hit point of the robot is zero; and
resetting the hit point of the robot to be an initial reference hit point, and controlling the robot to restart moving, when the robot is in the stationary state for a time length greater than a second preset time length.

7. The method as claimed in claim 1, further comprising:
performing obstacle recognition on the environment where the robot is located to acquire the obstacle information of the environment where the robot is located; and
constructing the environment map of the environment where the robot is located in real time according to the obstacle information,
the obstacle information comprising one or more of distance information between an obstacle and the robot, orientation information of the obstacle, shape information of the obstacle, and size information of the obstacle.

8. The method as claimed in claim 1, further comprising:
controlling the robot to send a trigger signal when the robot receives the trigger of the external object, the trigger signal comprising flashing light, a sound, or an action.

9. A robot, comprising a processor and a memory, wherein the memory stores an executable program code, and the processor is configured to call the executable program code to execute the robot avoidance control method as claimed in any one of claims 1-8.

10. A storage medium, in which an instruction is stored, the instruction running in a computer to enable the computer to execute the robot avoidance control method as claimed in any one of claims 1-8.
